# EUROPEAN PATENT APPLICATION

(11) **EP 1 975 053 A2**
(43) Date of publication of application: **01.10.2008**
(21) Application number: 08160728.5
(22) Date of filing: 03.03.2003
(51) Int. Cl.: B62K 15/00, B62K 25/16

(54) **Folding bicycle**

(30) Priority: 15.04.2002 SI 200200101; 18.12.2002 SI 200200308
(62) Divisional of application: 03708437.3
(71) Applicant: Studio Moderna SA, 6900 Lugano (CH)
(72) Inventor: Mihelic, Miko, 1356 Dobrova (SI)
(74) Representative: Viering, Jentschura & Partner

(57) **Abstract**

In the riding mode, the folding bicycle has the same geometry that defines the riding characteristics and ergonomics in a usual bicycle, and has in the storage or portable mode the dimensions that fit into the trunks of small-sized cars, while allowing folding without the use of tools and in riding mode having no gaps between the detachable parts. The bicycle has the front fork (4) with the fork blades (6) bent forward and equipped with two backwards- pointing swing-arms (7), which hold the front wheel (3) in such a way that its position remains the same as in a usual bicycle and can be adjusted to riding preferences. The swing- arms (7), which are attached to the fork blades (6), rest on the end parts (13) and are bound by the springs (14). In the riding mode, the springs (14) keep the swing-arms (7) constantly pressed against the end parts. The rear wheel (18) can be folded by turning it together with the chain stays around the pivot (19) with an attached coaxial shaft (22), which holds a pair of sprockets (23, 24). The cranks (16) and the sprocket (32) on the rear wheel (18) are connected by two chains (25, 31).

## Description

### Field Of The Invention

The subject of invention is a bicycle, which can, without the use of tools or any special knowledge or skills, quickly and easily be folded into such a shape and dimensions that it can be put into the trunk of any average-sized car, and is portable as well, while preserving the riding characteristics of a non-folding bicycle.

### Background of the Invention

The technical problem the invention solves is how to design a folding bicycle, which has in the riding mode the same geometry that defines the riding characteristics and ergonomics in a usual bicycle, and has in the storage or portable mode the dimensions that fit into the trunks of small-sized cars, while allowing folding without the use of tools and in riding mode having no gaps between the detachable parts.

Known folding bicycles typically have a two-piece frame, which can be dismantled, folded or telescopically shortened. To reduce the dimensions in the portable mode, both smaller-sized wheels can also be removed. The disadvantage of all the solutions is that the joints between the frame parts gradually develop a certain gap, or the joints themselves are the weak points in the construction that gradually lead to abreakdown. Another disadvantage is that the frames are usually shorter and thus ergonomically unsuitable for the rider's size. The result of this is that one cannot comfortably ride such a bicycle on a greater distance, the rider is less energy efficient, and the riding characteristics are less favorable due to the different position of front wheel and smaller wheel size compared to the non-folding bicycles.

### Summary of the Invention

The technical problem described above is solved by the bicycle, which is the subject of the present invention. A main feature and innovation is in the fact that the shape and size of the frame remains the same as in a usual non-folding or rigid men's or women's bicycle. One innovation is the front fork, which enables turning by 180 degrees and folding of the front wheel towards the down tube, while in the riding mode preserving the same angle as in usual bicycles. The down tube is made of two tubes with a slot in between to slide the front wheel into. The handlebar can also be folded towards the frame. Since the diameter of the wheels are only of the 16" size or 23" diameter, the length of the bicycle folded in such away enables transportation in the trunk of small-sized car. If the rear wheel is removed, the length of the folded bicycle may be further reduced to the length of the frame, although in one embodiment, the rear wheel is foldable as well.

The chain stays, together with the rear wheel, is foldable upwards toward the seat. To facilitate the folding of the chain stays and the rear wheel, the transmission from the chainring to the sprocket is complemented by two sprockets and a shaft, i.e. consists two chains in series, which results in an additional transmission ratio. The shaft also serves as a pivot, around which the chain stays and the rear wheel fold. The front chain remains between the front chainring and the sprocket on the shaft, while the rear chain remains between the front sprocket and the rear sprocket, and shifts upwards together with the chain stays and the rear wheel without changing the distance between the front sprocket and the rear sprocket. To reduce the width of the folded bicycle, the pedals can also be folded.

Such a bicycle can also be arranged as a tandem, without extending. Due to the normal frame size and the small-sized wheels, the bicycle can be equipped with an electric or internal combustion motor without increasing the folded dimensions. Since the geometry of the bicycle is identical to the geometry of a usual bicycle, the riding characteristics remain the same, so the bicycle is suitable for longer trips as well. Transmission gears, preferably internal, can improve the riding characteristics. The gear unit can be placed in the rear hub, on the middle shaft, or in the bottom bracket.

The weight of such a bicycle is the same or less than in usual bicycles, so in portable mode it can be carried around, possibly in a specially designed bag or backpack.

The front forks allow installation of shock absorbers, which increase the stability of the bicycle, as well as the comfort of the ride.

### Brief Description of the Figures

Exemplary embodiments of the invention will be explained in detail with reference to the following figures in which like reference numerals refer to like parts throughout:

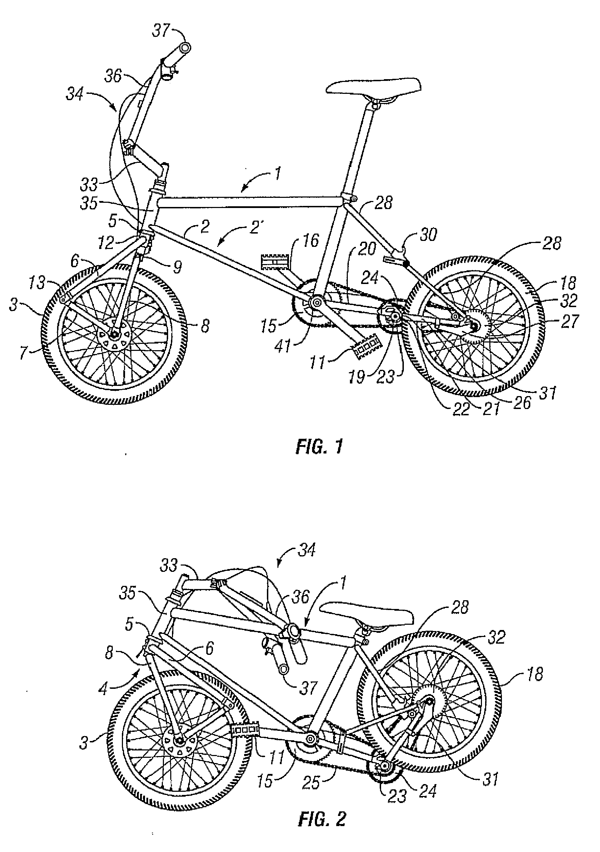

Fig. 1 is a schematic of a first embodiment of a folding bicycle in a riding mode accordance with the present invention;
Fig. 2 is a the schematic of a first embodiment of a folding bicycle in a portable mode in accordance with the present invention;
Fig. 3 illustrates a tandem version of a folding bicycle in accordance with the present invention;
Fig. 4 is a schematic of a second embodiment of the folding bicycle in the riding mode, in accordance with the present invention;
Fig. 5 illustrates a folding bicycle with an auxiliary engine in accordance with the present invention;
Fig. 6 illustrates a women's version of a folding bicycle in accordance with the present invention;

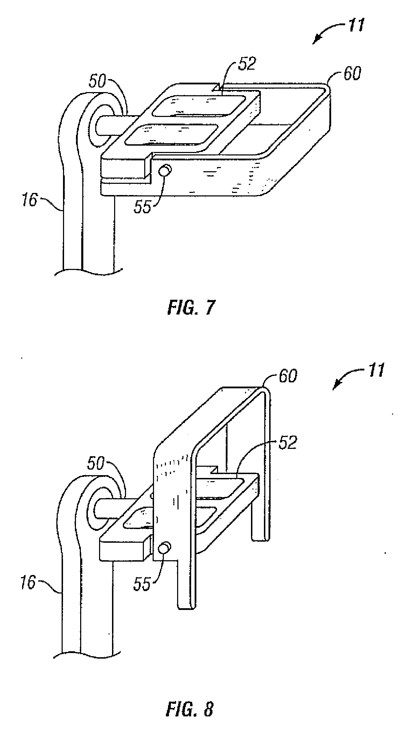

Fig. 7 illustrates a folding pedal of a bicycle in the riding mode in accordance with the present invention; and
Fig. 8 illustrates a folding pedal in a folded position in accordance with the present invention.

### Detailed Description of the Invention

In the following paragraphs, the present invention will be described in detail by way of example with reference to the drawings. Throughout this description, the preferred embodiment and examples shown should be considered as exemplar, rather than as limitations on the present invention. As used herein, the "present invention" refers to any one of the embodiments of the invention described herein, and any equivalents. Furthermore, reference to various feature(s) of the present invention throughout this document does not mean that all claimed embodiments must include the referenced feature(s).

The folding bicycle comprises a frame (1) of any known geometry, designed according to the rider's size and riding preferences. The down tube (2) may include two tubes with a gap between them (2'), which is approximately the same or wider than the width of the front wheel (3). The front fork (4) is attached to the frame (1) at the bearing (5). The fork blades (6) are bent forward and equipped with two backwards-pointing swing-arms (7), which hold the front wheel (3) in such a way that its position remains the same as in a usual bicycle and can be adjusted to riding preferences. The swing-arms (7) are connected by a stirrup (8), which encloses the wheel (3). Its top is pressed against the joint (9) of the front fork (4) directly under the bearing (5). The two parts can merely touch or can be connected by a shock absorber, preferably an elastomer type. The stirrup (8) is connected to the fork (4), preferably in the area of the joint (9), by a manually releasable connection (12), preferably a spring lock.

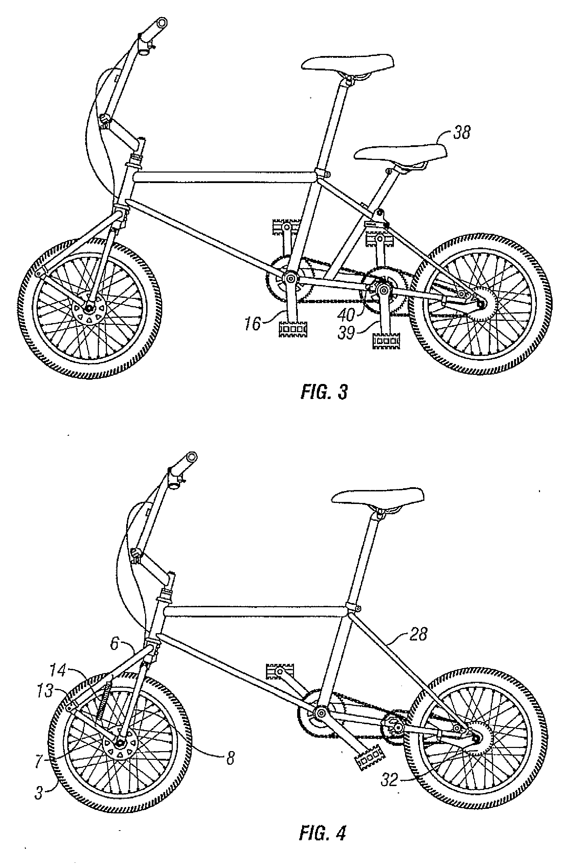

In the other example, as illustrated in the second embodiment of the folding bicycle illustrated in Fig. 4, the swing-arms (7), which are attached to the fork blades (6), rest on the end parts (13) and are bound by the springs (14). In the riding mode, the springs (14) keep the swing-arms (7) constantly pressed against the end parts. The end parts (13) can be replaced by the shock absorbers (14'), such as preferably the elastomer type, or the hydraulic or pneumatic type.

In the first example, when the connection (12) is released and the front wheel (3) on the swing-arms (7) is turned forwards by approximately 180 degrees, or in the second example, when the swing-arms (7) are turned by straining the springs (14), so that the springs (14) hold the front wheel (3) next to the fork blades (6), and when the fork (4) is turned by 180 degrees, the front wheel (3) is fixed in the gap (2') between the two down tubes (2) of the frame (1). Such folding of the front wheel (3) and the fork (4) is possible without the use of any tools in the preferred example. It decreases the dimensions of the bicycle in the portable mode without altering the riding characteristics in the riding mode.

The chainring ) and the cranks (16) are mounted to the frame in any desired fashion and at any desired position. The rear wheel (18) can be folded by turning it together with the chain stays (26) around the pivot (19), which is placed on the frame (1), between the chainring (15) and the rear wheel (18).

From the frame (1), preferably from a point close to the chainring (15), a preferably double bracket (20) extends towards the rear wheel (18). At the end of the bracket (20) there is a bearing assembly (21) with a shaft (22), which holds two coaxial sprockets (23) and (24). The chainring (15) and the sprocket (23) are connected by the front chain (25). The chain stays (26) are attached to the bearing assembly (21), and have dropouts (27) in which the rear wheel (18) is attached. The seat stays (28), which are connected to the chain stays (26), are releasably connected to the strut (29), protruding from the frame (1). Preferably, they are connected by a quick-release mechanism. Between the strut (29) and the seat stays (28), a shock absorber can be fitted as well.

The rear wheel (18) is mounted in the dropouts (27). By its sprocket (32), the rear chain (31), the sprockets (24) and (23), the front chain (25) and the chainring (15), it is connected to the cranks (16). The rear hub can also be equipped with internal gears, which are not shown in the figures. The internal gears can also be placed on the bearing assembly (21), or in the bottom bracket (16). External gears on the rear wheel can also be used, but would be less favorable due to the small size of the wheel and the length of the derailleur, which would be too close to the ground.

When the quick-release mechanism (30) is released, the chain stays (26), the rear wheel (18) and the rear chain (31) are pivoted around the shaft (22) towards the frame (1) without changing the distance between the chainring pairs. Therefore, it is not possible for the chains to come off during the folding and unfolding of the bicycle. Such a design also permits the use of two chain covers, which do not hinder the folding of the rear wheel and the chain stays. The chain covers are not shown in the figures.

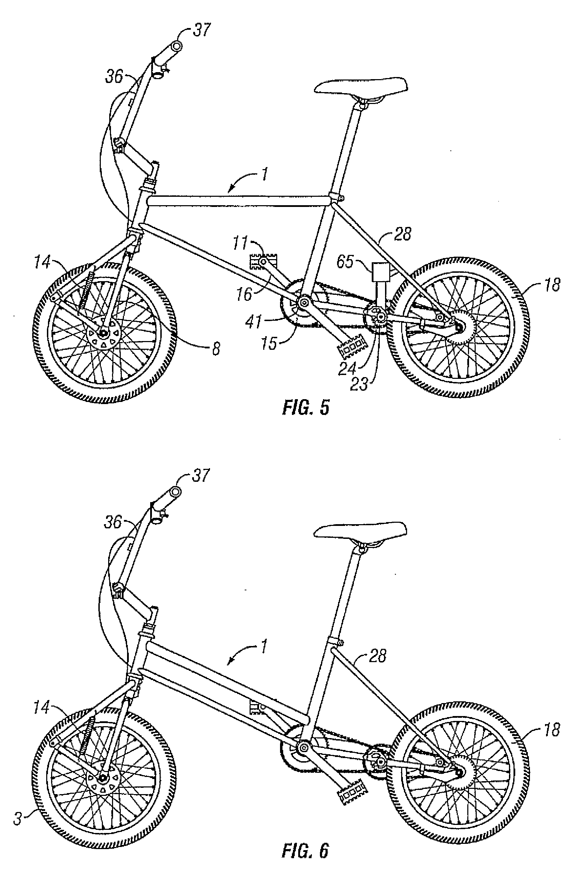

In one embodiment, as illustrated in Fig. 5, a drive mechanism (65) is provided. The drive mechanism can be mounted in any fashion. For example, it is mounted to frame (1) and provides a motive force via connection to one of the sprockets (23, 24 or 32), or chainring (15). Examples of drive mechanisms (65) are an electrical motor or an internal combustion engine.

In an alternative embodiment, as illustrated in Figs. 5 and 6, the rear wheel (18) is removable father reducing the length of the folded bicycle to the length of the frame. In addition, in an alternate embodiment, quick release mechanism (3 0) is not provided, making strut (28) and stays (29) in fixed relation to one another.

In the other example, the chain stays (26) can be folded around the pivot (19) and are equipped with a locking device, preferably a pin. They can also be equipped with a shock absorber and/or spring, which are not displayed in the figures. In this example there are no seat stays.

To reduce the width of the folded bicycle, folding pedals (11) can be used. Any form of pedals (11) can be used and mounted on the cranks (16). In one example, each crank (16) has a shorter stub (50) with a bearing and a pedal (11), such as including a narrow pedal portion (52). Each pedal (11) preferably has associated with it a joint assembly (55), which enables folding of the outer footrest (60) portion of the pedal (11), and in the riding mode can provide a larger footrest foot seating surface.

The handlebar (34) is foldable. The middle part, which is attached to the bearing assembly in the head tube (35), can be foldedbackwards and downward, while each side (36) can be folded towards the frame (1), so that the handles (37) are right next to the frame (1).

The middle shaft (22) also allows that the bicycle can be arranged as a two-seat tandem without the extending of the frame. The second seat support (38) can easily be attached, and the shaft (22) can be equipped with two additional cranks (39). The front and the rear pair of cranks can be aligned equally or with a 90-degree delay to allow both riders to pedal undisturbedly. The direct transmission between the sprockets (23) and (24) enables synchronized rotation of the cranks. It is also possible to mount a pair of footrests (40) to the chain stays (17), instead of the additional cranks.

Since the wheels are of smaller size, preferably 16" or alternatively 23" or other sizes, the spokes are less loaded, so the single-person frame could withstand the load of two persons as well.

The bicycle also can be equipped with brakes, lights, fenders, a stand etc., as frequently provided in bicycles.

The design of the frame allows variations in shape and dimensions. It can be designed as a men's, women's, children's bicycle, or any other shape, without changing the essence of the invention, defined in the following patent requirements.

Instead of chains, it is also possible to use drivebelts, preferably geared drivebelts.

Further embodiments of the invention are as follows:

According to a first aspect, a folding bicycle is provided, comprising: a frame of known geometry of the front wheel angle, the wheelbase and the distance between the cranks, the seat and the handlebar, the fork, which is attached to the frame at the bearing, the front wheel, the rear wheel), the handlebar, the transmission, the brake assembly, the seat, and other accessories, such as the lights, the bell, the mudguards, the carrier, the stand etc., is defined by the following: in the riding mode, the fork blades of the fork are bent forwards. On the fork blades, there are two backwards-pointing pivotable swing-arms, which hold the front wheel in such a way that its position remains the same as in a usual bicycle and can be adjusted to riding preferences. The swing-arms are connected by a stirrup, which encloses the wheel. Its top is pressed against the joint of the front fork under the bearing. The front wheel can be pivoted forwards by approx. 180 degrees, and the fork can be turned by 180 degrees as well. By doing so, the front wheel is partially placed into the gap between the double down tubes of the frame. The rear wheel is mounted to the chain stays, which can be folded around the pivot, placed on the frame near the chainring. The pivot is equipped with a bearing assembly with a shaft, holding two coaxial sprockets. By the front chain, the sprocket is connected to the chainring and the cranks. By the rear chain, the sprocket is connected to the sprocket an the rear wheel.

According to a first sub-aspect, in the first aspect, the swing arms rest on the end parts and are bound by the springs, which are attached to the fork blades.

According to a second sub-aspect, in the first aspect, the end parts can be replaced by the shock absorbers, preferably the elastomer type, or the hydraulic or pneumatic type.

According to a third sub-aspect, in any one of the first aspect and the first and second sub-aspects, the frame has a double down tube with a gap, which is approximately the same or wider than the width of the front wheel.

According to a fourth sub-aspect, in any one of the first aspect and the first to third sub-aspects, the transmission from the cranks to the rear wheel is done by two drivebelt assemblies with a double pulley an the middle shaft.

According to a fifth sub-aspect, in the first aspect, the chain stays are foldable around the pivot and are equipped with a locking device, preferably a pin. They can also be equipped with a shock absorber and/or spring.

According to a sixth sub-aspect, in any one of the first aspect and the first to fifth sub-aspects, both wheels are of smaller size, preferably 16".

According to a seventh sub-aspect, in any one of the first aspect and the first to sixth sub-aspects, the handlebar is foldable. The middle part, which is attached to the bearing assembly in the head tube, can be folded backwards and downward, while each side can be folded towards the frame, so that the handles are right next to the frame.

According to an eight sub-aspect, in any one of the first aspect and the first to seventh sub-aspects, the frame can be equipped with an electric or internal combustion motor.

According to a ninth sub-aspect, in any one of the first aspect and the first to eight sub-aspects, behind the seat, the frame is fitted with a second seat support.

## Claims

1. A folding bicycle comprising:
a frame (1) which has a top tube, a head tube (35), at least one down tube (2), and a seat tube; and
a hinged front-wheel assembly having a front wheel mounting assembly hingedly attached to the frame (1) at a joint (9), and a front wheel (3) mounted to the front wheel fork (4);
wherein the front-wheel assembly is hingeable by rotating the front wheel fork (4) by 180 degrees and releasing the joint (9).

2. The folding bicycle according to claim 1, further comprising a handlebar assembly including a handlebar that is foldable towards the frame.

3. The folding bicycle according to claim 1, further comprising a chain ring (15) located substantially at the bottom of the seat tube.

4. The folding bicycle according to claim 3, further comprising a bracket (20) having a front end and a rear end, the bracket (20) extending between the chain ring (15) and a rear wheel (18).

5. The folding bicycle according to claim 4, further comprising a bearing assembly (21) at the rear end of the bracket (20), the bearing assembly (21) having a shaft (22), wherein the shaft (22) holds a first sprocket (23) and a second sprocket (24).

6. The folding bicycle according to claim 5, wherein the first sprocket (23) is connected to the chain ring (15) by a front chain (25) rotatably coupling the chain ring (15) and the first sprocket (23).

7. The folding bicycle according to claim 6 further comprising a rear sprocket (32)
wherein the second sprocket (24) and the rear sprocket (32) are connected by a rear chain (31) rotatably coupling the second sprocket (24) and the rear sprocket (32).

8. The folding bicycle according to one of claims 1 to 7, **characterized by** further comprising an electric motor or an internal combustion motor.

9. The folding bicycle according to one of claims 1 to 8, **characterized by** further comprising a second seat support (38) attached to the frame (1) and located behind a seat attached to the frame (1).

10. The folding bicycle according to one of claims 1 to 9, **characterized by** further comprising cranks (16) equipped with folding pedals (11).

11. The folding bicycle according to one of claims 1 to 10, **characterized by** further comprising chainstays (26) and seatstays (28), wherein the seatstays (28) connect the chainstays (26) to the frame (1) and which are releasably connected to a strut (29) extending from the frame (1).
